# EUROPEAN PATENT SPECIFICATION

(11) **EP 2 295 303 B1**
(45) Date of publication and mention of the grant of the patent: **01.02.2012**
(21) Application number: 09425350.7
(22) Date of filing: 11.09.2009
(51) Int. Cl.: B61D 3/18, B60P 3/08, B60R 3/00

(54) **Railway car for carrying motor-vehicles**
Eisenbahnwaggon zur Beförderung von Kraftfahrzeugen
Wagon ferroviaire pour le transport de véhicules motorisés

(43) Date of publication of application: 16.03.2011
(73) Proprietor: S.I.T.F.A. - Società Italiana Trasporti Ferroviari Autoveicoli S.p.A., 10121 Torino (IT)
(72) Inventor: Giacone, Marco, 12038 Savigliano (Torino) (IT)
(74) Representative: Notaro, Giancarlo

(56) References cited:
- DE-B- 1 178 103
- US-A- 1 411 780
- US-A- 3 182 609
- US-A- 5 921 531
- US-A1- 2007 114 507

## Description

The present invention relates to railway cars for carrying motor vehicles, of the type comprising a bottom deck and a top deck that are to receive the motor vehicles to be carried (i.e, rack cars).

In railway cars of this type, it is necessary to guarantee the safety of the operator during the manoeuvres of loading and unloading of the motor vehicles, in particular when the operators finds themselves operating on the top deck of the rack car. At the same time, the railway car must have a configuration and dimensions compatible with those of the tunnels present along the track and must not in particular present projecting parts that may be incompatible with the shape and dimensions of the section of the tunnels or of other delimited passages provided along the track. For this purpose, there is defined in this sector a so-called clearance gauge, or "gabarit", within which the section of the railway car must be contained.

A railway car according to the preamble of claim 1 is known from documents DE 11 78 103 B, US-A-3 182 609, US 2007/114507 A1 in combination.

With a view to solving the above-indicated problem, the present invention provides a railway car for transporting motor vehicles, having the features of claim 1. Other features of the invention are indicated in the dependent claims.

Thanks to the aforesaid characteristics the invention enables guaranteeing of the necessary safety for the operators during the manoeuvres of loading and unloading of the motor vehicles on the top deck of the rack car, thanks to the possibility of keeping the railing in its raised position. Once said manoeuvres are completed, before the railway car is set in motion, the railings must be brought into their lowered position, in which any possible interference between the railings and the tunnel walls or other delimited passages provided along the path is prevented since the cross section of the car comes thus to be contained within the aforementioned clearance gauge (or "gabarit").

In order to eliminate the risk of the railway car being set in motion with the railings raised, the aforementioned warning means enable the operators to identify promptly any possible railing modules that have remained in the raised position.

A further important advantage of the invention lies in the fact that the purposes referred to above are achieved with means that are extremely simple and easy to use.

Further characteristics and advantages of the invention will emerge from the ensuing description with reference to the annexed drawings, which are provided purely by way of non-limiting example and in which:
- Figure 1 is a schematic perspective view of a preferred embodiment of the railway rack car according to the invention with the railings of the top deck in the lowered condition;
- Figure 2 is a perspective view at an enlarged scale of the top deck of the rack car of Figure 1, with the railings in the raised position and an additional front protection;
- Figure 3 is a perspective view at an enlarged scale of a railing module in the raised condition;
- Figure 4 is a perspective view of the railing module of Figure 3, with the railing in the lowered condition;
- Figure 5 is a perspective view at an enlarged scale of a device for blocking the mobile part of the railing; and
- Figures 6-8 are perspective views that illustrate a warning device associated to the railing module in different operating conditions.

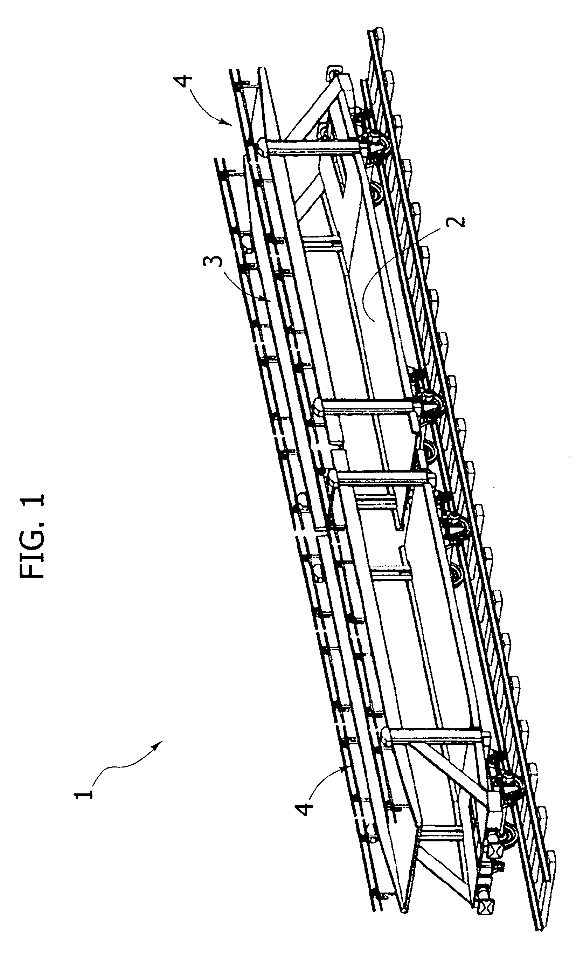

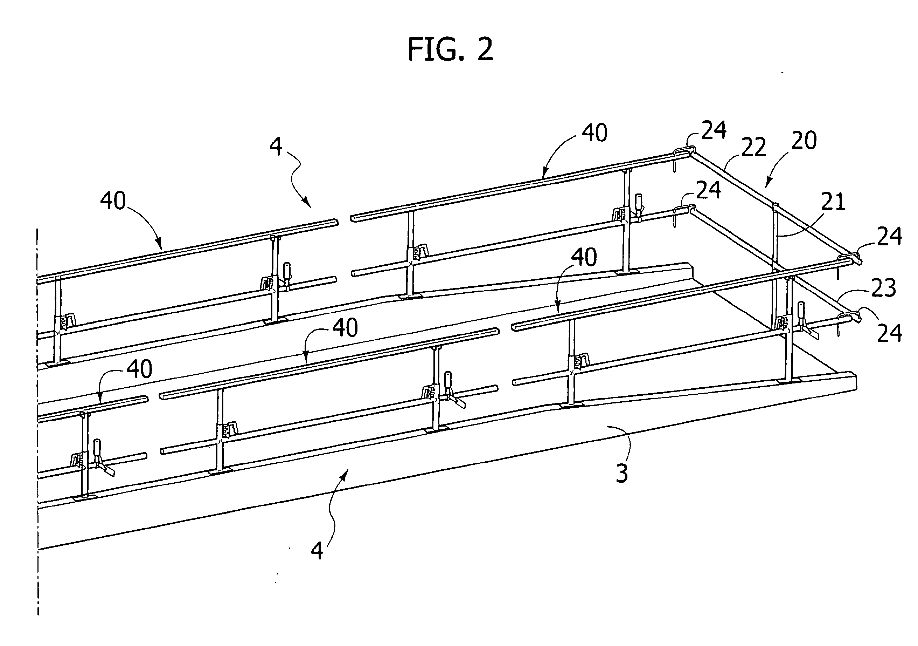

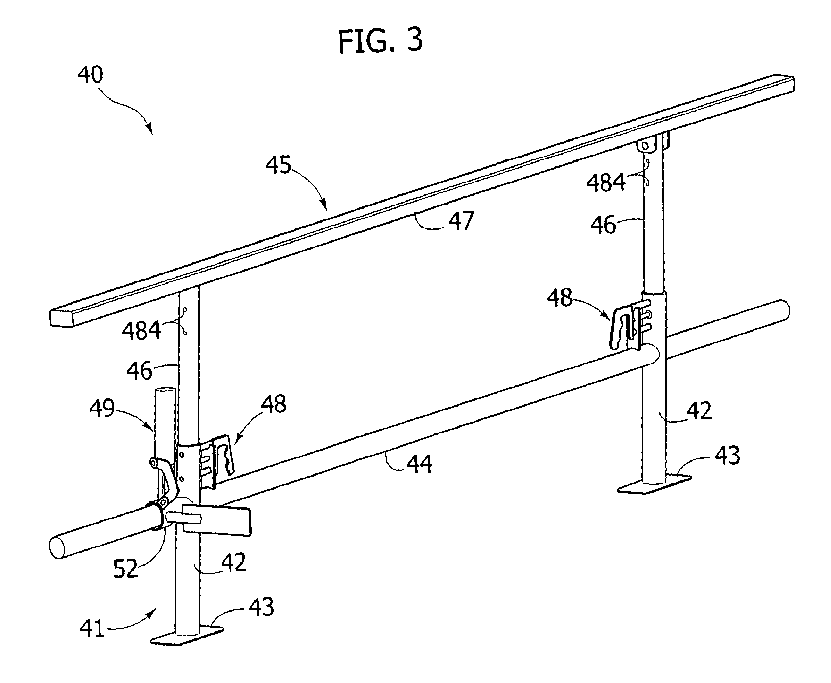

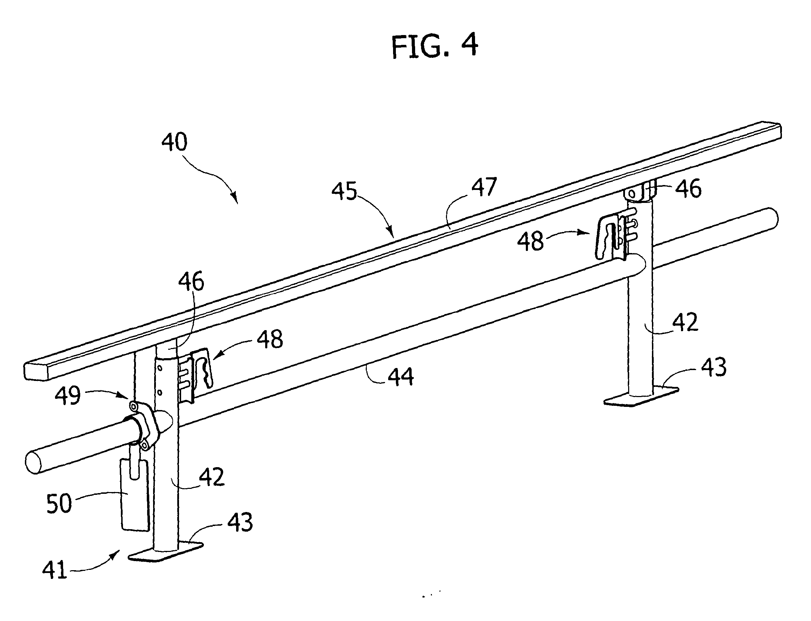

In Figure 1, the reference number 1 designates as a whole a railway rack car for carrying motor vehicles, comprising a bottom deck 2 and a top deck 3 equipped with longitudinal side railings 4. As may be seen in Figure 2, each of the longitudinal side railings 4 comprises a plurality of railing modules 40, more clearly illustrated in Figures 3, 4. With reference to said figures, each railing module 40 comprises a fixed supporting structure 41 including two or more tubular uprights 42, each provided with a bottom foot 43 for its fixing (for example, by means of bolts or by welding means) to the top deck 3. The fixed supporting structure 41 moreover comprises a longitudinal member 44, which is also tubular and has a circular section like the uprights 42. The longitudinal member 44 is joined to the two fixed uprights 42 and projects longitudinally beyond said uprights with its end portions. The longitudinal member 44, in the case of the example illustrated, is set at a distance both from the base 43 of the two fixed uprights 42 and from their top ends.

Each railing module 40 moreover comprises a structure 45 that is vertically mobile between a raised position (illustrated in Figures 2, 3) and a lowered position (illustrated in Figures 1, 4). In the example illustrated, the mobile structure 45 comprises two tubular uprights with circular section 46 that are mounted so that they can slide within the fixed uprights 42, and a hand rail 47, which is rigidly connected to the top ends of the tubular uprights 46.

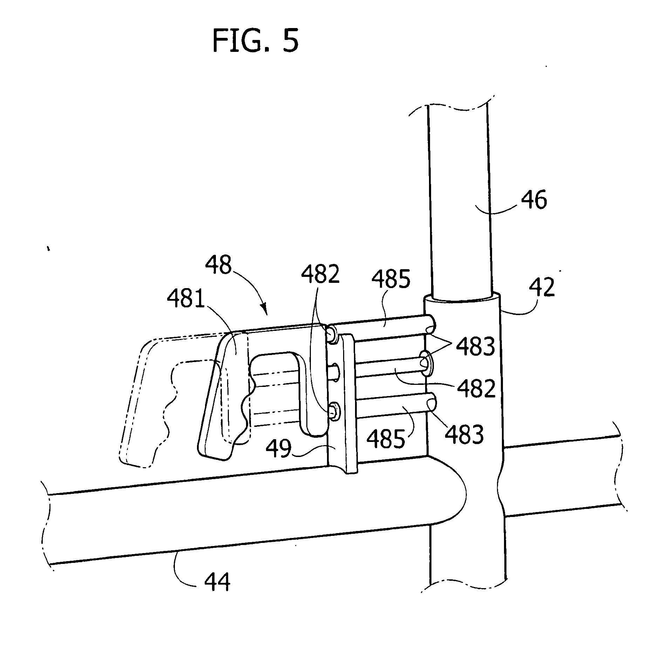

The mobile structure of the railing module 40 can be blocked both in its lowered position and in its raised position by means of two bolt blocking devices 48. As may be seen more clearly in Figure 5, each device 48 comprises a grip 481, from which there project three bolt elements 482 designed to be inserted through corresponding holes 483 and 484 provided in the fixed uprights 42 and in the mobile uprights 46 (see also Figure 3). As illustrated in Figure 5, fixed to each longitudinal member 44, adjacent to each fixed upright 42, is a plate 49 with holes or guide passages for the bolt elements 482. Two of the bolt elements 482 (the one situated in a highest position and the one situated in a lowest position) traverse diametrally opposite holes 483 provided in the wall of each fixed upright 42 and the corresponding holes 484 (see Figure 3) provided in the corresponding mobile upright 46. The bolt element 482 that occupies, instead, a vertical position intermediate between the other two bolt elements 482 has a shorter length than the latter and with its tip engages only one hole 483 provided on one side of the fixed upright 42. Furthermore, the two bolt elements 482 that occupy a top position and a bottom position are guided within bushings 485 welded to the fixed upright 42 and projecting in cantilever fashion from the latter. The mobile uprights 46 have a pair of holes 484 in two areas set at a distance apart from one another so as to enable blocking of the mobile part 45 both in the lowered condition and in the raised condition, as illustrated in Figures 3 and 4.

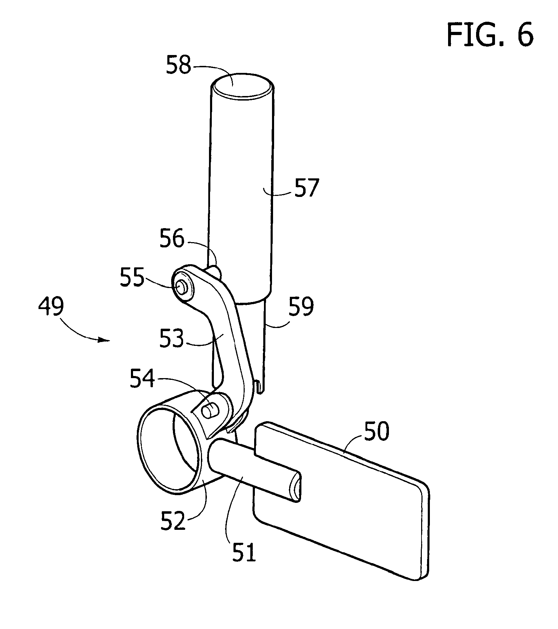

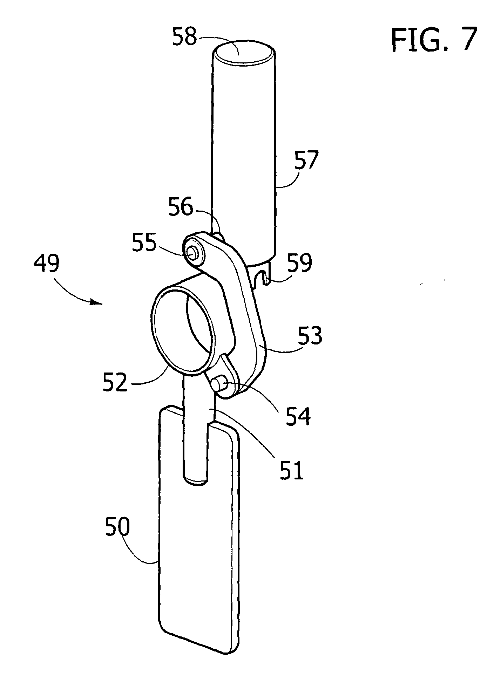

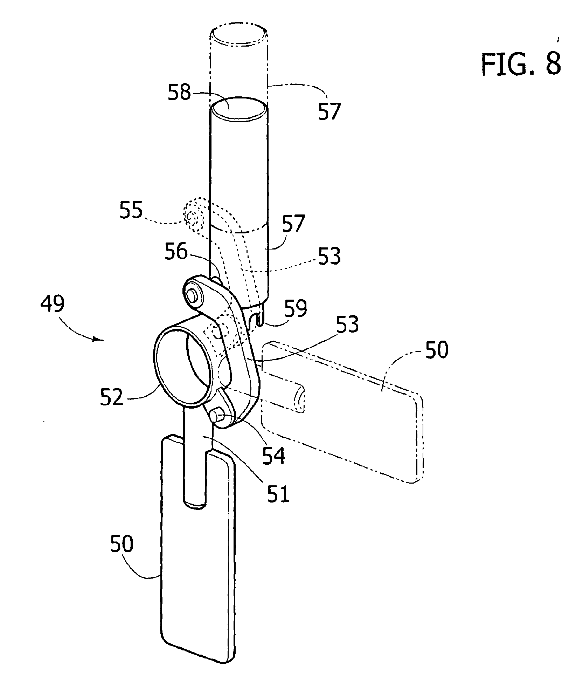

Associated to each railing module 40 is a warning device designed to render immediately evident a raised condition of the railing module (40). Said device, which is designated as a whole by the reference number 49, comprises a flag element 50 (see in particular Figures 6-8), constituted by a plate carried at the end of a stem 51 projecting radially in cantilever fashion from a bushing 52 mounted rotatably above the longitudinal member with circular section 44 (see also Figure 3). The flag element 50 can thus be displaced between a retracted lowered position (illustrated in Figure 4) and a raised position, which is horizontal and projects in cantilever fashion from the clearance gauge of the railway car so as to be immediately visible. Rotation of the flag element 50 between its lowered position and its raised position is controlled by an articulated arm 53 having a double-elbow shape, visible in Figures 6-8. The arm 53 has one end articulated in 54 to the bushing 52 and the opposite end articulated in 55 to a pin 56 welded to a cylindrical body 57, which has a top wall 58. The cylindrical body 57 is mounted so that it can slide vertically over a cylindrical stem 59, the bottom end of which is rigidly connected in any known way, for example by welding means, to the longitudinal member 44 (see also Figures 3, 4). Set between the stem 59 and the cylindrical body 57 is a spring (contained within the body 57 and not visible in the drawings), which tends to recall the cylindrical body 57 towards the raised position (illustrated in Figure 6 and represented also with a dashed line in Figure 8), where the arm 53 keeps the flag element 50 in its raised position. When the mobile part of the railing module 40 is lowered by bringing the hand rail 47 from the raised position illustrated in Figure 3 to the lowered position illustrated in Figure 4, the hand rail 47 engages the top end 58 of the body 57, causing lowering thereof, against the action of the spring (not visible in the drawings) associated to the element 57. In this way, the cylindrical body 57 is forced to reach its position of maximum lowering with respect to the stem 59, in which the arm 53 keeps the flag element 50 in its lowered vertical position retracted within the railway car.

Consequently, as may be seen, the display device 49 associated to each railing module 40 renders immediately visible for the operators a possible raised condition of the railing module (40) so as to guarantee that the railway car is not moved until the railing modules (40) are lowered.

As may be seen in Figure 2, also provided is a front railing module 20 having a single central upright 21 and two cross members 22, 23 provided with anchoring elements 24 for connection to the longitudinal railing modules (40). The front module 20 is totally removable from the top deck 3 of the rack car.

From the foregoing description, it is evident that the invention enables guaranteeing complete safety of the operators during the operations of loading and unloading of the motor vehicles on the top deck of the rack car. At the same time, when the car has to move, the railings can be brought into their lowered condition so as to reduce to a minimum their overall dimensions. The structure and conformation of the railings could be different from the one illustrated purely by way of example. For instance, there could be provided railing modules with uprights articulated at the bottom to the deck of the rack car and a hand rail that is also articulated to said uprights so that the entire structure can be brought down, like a pantograph, onto the deck.

Furthermore, it is also possible to provide motor means for governing displacement of the railing modules between the raised condition and the lowered condition.

Of course, without prejudice to the principle of the invention, the details of construction and the embodiments may in any case vary widely with respect to what is described and illustrated herein purely by way of example, without thereby departing from the scope of the annexed claims.

## Claims

1. A railway car for carrying motor vehicles, comprising a bottom deck (2) and a top deck (3), wherein the top deck (3) is equipped with longitudinal side railings (4) that can be displaced between a raised position and a lowered position, wherein each longitudinal side railing (4) is constituted by a plurality of separate railing modules (40), which are longitudinally aligned and can each be displaced between said raised position and said lowered position, wherein each railing module (40) comprises a fixed supporting structure (41) rigidly connected to the structure of the top deck (3) and a structure (45) that is mobile with respect to said supporting structure (41) between said raised position and said lowered position,
**characterized in that** said railway car comprises a warning device (49) for giving warning of the raised condition of the side railing (4), and
**in that** said warning device (49) comprises a flag element (50) that can be displaced between a retracted lowered position and a raised position projecting in cantilever fashion from the railway car, with elastic means that recall it towards the raised position and a mechanism (57, 53, 52) that governs lowering thereof, against the action of said elastic means.

2. The railway car according to Claim 1, **characterized in that** it comprises means (48) for blocking the mobile structure (45) of the side railing (4) in its raised position and in its lowered position.

3. The railway car according to Claim 1, **characterized in that** the supporting structure (41) of each railing module (40) comprises a plurality of fixed tubular uprights (42) and the mobile structure of the railing module (40) comprises a plurality of uprights (46) that can slide vertically within the fixed uprights (42) of the supporting structure (41), and a hand rail (45) connected to the top ends of the aforesaid slidable uprights (46).

4. The railway car according to Claim 3, **characterized in that** it comprises a bolt device (48) that can be engaged in corresponding holes of the fixed uprights (42) and of the slidable uprights (46) for blocking the mobile part (45) of the railing module (40) in the raised condition or in the lowered condition.

## Patentansprüche

1. Eisenbahnwaggon zum Transportieren von Kraftfahrzeugen, der eine untere Ladefläche (2) und eine obere Ladefläche (3) umfasst, wobei die obere Ladefläche (3) mit in Längsrichtung verlaufenden seitlichen Geländern (4) versehen ist, die zwischen einer aufgerichteten Position und einer abgesenkten Position verstellt werden können, jedes in Längsrichtung verlaufende seitliche Geländer (4) durch eine Vielzahl separater Geländer-Module (40) gebildet wird, die in Längsrichtung fluchtend sind und jeweils zwischen der aufgerichteten Position und der abgesenkten Position verstellt werden können, jedes Geländer-Modul (40) eine feststehende Tragestruktur (41), die starr mit der Struktur der oberen Ladefläche (3) verbunden ist, und eine Struktur (45) umfasst, die in Bezug auf die Tragestruktur (41) zwischen der aufgerichteten Position und der abgesenkten Position bewegt werden kann,
**dadurch gekennzeichnet, dass** der Eisenbahnwaggon eine Warnvorrichtung (49) umfasst, mit der eine Warnung bezüglich des aufgerichteten Zustandes des seitlichen Geländers (4) ausgegeben wird, und
**dadurch**, dass die Warnvorrichtung (49) ein Fahnenelement (50), das zwischen einer eingezogenen abgesenkten Position und einer aufgerichteten Position verstellt werden kann, in der es auslegerartig von dem Eisenbahnwaggon vorsteht, mit einer elastischen Einrichtung, die es an die aufgerichtete Position zurückstellt, und einem Mechanismus (57, 53, 52) umfasst, der Absenken desselben gegen die Wirkung der elastischen Einrichtung bewirkt.

2. Eisenbahnwaggon nach Anspruch 1, **dadurch gekennzeichnet, dass** er eine Einrichtung (48) umfasst, mit der die bewegliche Struktur (45) des seitlichen Geländers (4) in ihrer aufgerichteten Position und in ihrer abgesenkten Position gesperrt wird.

3. Eisenbahnwaggon nach Anspruch 1, **dadurch gekennzeichnet, dass** die Tragestruktur (41) jedes Geländer-Moduls (40) eine Vielzahl feststehender röhrenförmiger Stützen (42) umfasst und die bewegliche Struktur des Geländer-Moduls (40) eine Vielzahl von Stützen (46), die in den feststehenden Stützen (42) der Tragestruktur (41) vertikal verschoben werden können, sowie einen Handlauf (45) umfasst, der mit den oberen Enden der verschiebbaren Stützen (46) verbunden ist.

4. Eisenbahnwaggon nach Anspruch 3, **dadurch gekennzeichnet, dass** er eine Riegelvorrichtung (48) umfasst, die mit entsprechenden Löchern der feststehenden Stützen (42) und der verschiebbaren Stützen (46) in Eingriff gebracht werden kann, um den beweglichen Teil (45) des Geländer-Moduls (40) in dem aufgerichteten Zustand oder in dem abgesenkten Zustand zu sperren.

## Revendications

1. Wagon ferroviaire pour le transport de véhicules à moteur, comprenant un pont inférieur (2) et un pont supérieur (3), dans lequel le pont supérieur (3) est équipé avec des garde-corps latéraux longitudinaux (4) qui peuvent être déplacés entre une position levée et une position abaissée, dans lequel chaque garde-corps latéral longitudinal (4) est constitué par une pluralité de modules de garde-corps séparés (40) qui sont longitudinalement alignés et peuvent chacun être déplacés entre ladite position levée et ladite position abaissée, dans lequel chaque module de garde-corps (40) comprend une structure de support fixe (41) rigidement raccordée à la structure du pont supérieur (3) et une structure (45) qui est mobile par rapport à ladite structure de support (41) entre ladite position levée et ladite position abaissée,
**caractérisé en ce que** ledit wagon ferroviaire comprend un dispositif d'avertissement (49) pour donner un avertissement concernant la condition levée du garde-corps latéral (4), et
**en ce que** ledit dispositif d'avertissement (49) comprend un élément de drapeau (50) qui peut être déplacé entre une position abaissée rétractée et une position levée en saillie en porte-à-faux par rapport au wagon ferroviaire, avec des moyens élastiques qui le rappellent vers la position levée et un mécanisme (57, 53, 52) qui gère son abaissement, contre l'action desdits moyens élastiques.

2. Wagon ferroviaire selon la revendication 1, **caractérisé en ce qu'**il comprend des moyens (48) pour bloquer la structure mobile (45) du garde-corps latéral (4) dans sa position levée et dans sa position abaissée.

3. Wagon ferroviaire selon la revendication 1, **caractérisé en ce que** la structure de support (41) de chaque module de garde-corps (40) comprend une pluralité de montants tubulaires fixes (42) et la structure mobile du module de garde-corps (40) comprend une pluralité de montants (46) qui peuvent coulisser verticalement à l'intérieur des montants fixes (42) de la structure de support (41) et une rampe (45) raccordée aux extrémités supérieures des montants coulissants (46) mentionnés précédemment.

4. Wagon ferroviaire selon la revendication 3, **caractérisé en ce qu'**il comprend un dispositif de boulon (48) qui peut être mis en prise dans des trous correspondants des montants fixes (42) et des montants coulissants (46) pour bloquer la partie mobile (45) du module de garde-corps (40) dans la condition levée ou dans la condition abaissée.
